# EUROPÄISCHE PATENTSCHRIFT

(11) **EP 3 119 659 B1**
(45) Veröffentlichungstag und Bekanntmachung des Hinweises auf die Patenterteilung: **25.07.2018**
(21) Anmeldenummer: 15710487.8
(22) Anmeldetag: 17.03.2015
(51) Int. Cl.: B62B 9/10

(54) **ZUSAMMENKLAPPBARES KINDERWAGEN- ODER PUPPENWAGENGESTELL**
COLLAPSIBLE PUSHCHAIR FRAME OR DOLL'S PRAM FRAME
ARMATURE PLIABLE POUR POUSSETTE D'ENFANT OU DE POUPÉE

(30) Priorität: 17.03.2014 DE 202014101198 U
(43) Veröffentlichungstag der Anmeldung: 25.01.2017
(73) Patentinhaber: Curt Würstl Vermögensverwaltungs-GmbH & Co. KG, 95032 Hof (DE)
(72) Erfinder: WUERSTL, Jan-Stefan, 95194 Regnitzlosau (DE)
(74) Vertreter: Sperschneider, Alexandra
(86) Internationale Anmeldenummer: PCT/EP2015/055517
(87) Internationale Veröffentlichungsnummer: WO 2015/140144

(56) Entgegenhaltungen:
- WO-A1-2012/027795
- DE-U1-202005 008 211
- GB-A- 2 343 623
- US-A1- 2008 296 872
- US-A1- 2013 087 993

## Beschreibung

Die Erfindung betrifft ein zusammenklappbares Kinderwagen- oder Puppenwagengestell, aufweisend mindestens zwei seitliche, im aufgestellten Zustand schräg von unten vorne nach hinten oben verlaufende Gestellholme mit daran obenseitig in Verlängerung vorgesehenen Schiebestangen und an den unteren Enden oder an einem diese verbindenden Brückenteil vorgesehenen Vorderradanordnung, zwei seitliche Stützstreben, die mit den Gestellholmen schwenkbeweglich über ein Gelenk beabstandet zu den unteren Enden befestigt sind und an ihren gegenüber den Anlenkungspunkten nach hinten versetzten unteren Enden Lagerungen für Hinterräder aufweisen, und einen Sitz- oder Liegeeinsatz, der in der Höhe im Gestell versetzbar angeordnet ist.

Ein zusammenklappbares Kinderwagen- oder Puppenwagengestell der gattungsgemäßen Art ist aus der DE 200 10 213 U1 bekannt. Das zusammenklappbare Kinderwagen- oder Puppenwagengestell weist zwei im Wesentlichen parallel von vorn nach hinten ansteigend verlaufende, durchgehende oder aus miteinander verbundenen Abschnitten gebildete schräge Gestellholme auf, die an ihren oberen Enden Schiebegriffe oder einen verbindenden Schiebebügel aufweisen. An den schrägen Gestellholmen sind verschwenkbar zwei hintere Stützstreben befestigt und bilden mit den Gestellholmen im aufgestellten Zustand des Gestells ein Dreieck. Ein Sitzelement aus einem Sitz- und einem Rückenlehnenteil ist zwischen den Schrägholmen als Einsatz angeordnet und an diesen befestigt. An den unteren Enden der hinteren Stützstreben sind Lagervorrichtungen für hintere Räder angebracht und an den vorderen Enden der Gestellholme oder an einem diese verbindenden Brückenteil ist eine Lagervorrichtung für mindestens ein Vorderrad vorgesehen. An den hinteren Stützstreben ist eine Zusatzeinrichtung in Form eines Tragrahmens angebracht, um einen zusätzlichen Funktionseinsatz aufnehmen zu können.

Ein zusammenklappbares Kinderwagen- oder Puppenwagengestell mit gleichem Grundaufbau ist ferner aus der EP 1 281 595 A1 bekannt. Die verschwenkbaren Stützstreben sind in der Aufstellposition von einem U-förmigen verbindungssteifen Rahmen gehalten, der aus zwei Längsstreben und einem die hinteren Enden verbindenden Brückenteil besteht und unterhalb des Sitz- oder Liegeeinsatzes zwischen den Gestellholmen angeordnet ist. Die vorderen Enden der Längsstreben sind im unteren Bereich des Wagengestells an den Gestellholmen oder an einer diese verbindenden Verbindungsstrebe angelenkt. Zwei Kopplungsstangen, die an den Längsstreben zwischen den Gestellholmen und den Stützstreben einerseits und an den Stützstreben andererseits jeweils in gleicher Höhe schwenkbeweglich befestigt sind, bewirken beim Hochziehen des verbindenden rückseitigen Bügels eine Bewegungstransformation und ein Aufeinanderzuschwenken der Stützstreben in Richtung der Gestellholme bzw. umgekehrt. Ein ähnlich aufgebautes Gestell ist ferner aus der DE 20 2007 011 937 U1 bekannt.

Zusammenklappbare Kinderwagengestelle der gattungsgemäßen Art sind ferner aus der DE 20 2013 103 448 U1, der DE 20 2009 014 572 U1, der EP 1 967 439 A2, der WO 2012/027795 A1, der CN 202463877 U und der CN 201457448 U bekannt.

Aus der DE 20 2010 000 510 U1 ist ein Wagengestell für einen Kinder- und/oder Puppenwagen mit mindestens zwei beabstandet zueinander angeordneten Hinterrädern und mindestens einem Vorderrad bekannt, welcher mindestens eine Schubstange und mindestens einen daran befestigbaren abnehmbaren Einsatz aufweist. An einem in der Höhe an der Schubstange verstellbaren Basiselement sind verschiedene Kinderwageneinsätze befestigbar. Das Basiselement kann in verschiedenen Höhenpositionen auf der Schubstange fixiert werden. Des Weiteren ist ein ähnlicher Aufbau einer Höhenverstelleinrichtung für einen Sitzeinsatz an einer einzigen Säule eines dreirädrigen Kinderwagens aus der US 2007/0257471 A1 bekannt.

Aus der DE 297 16 952 U1 ist ein Kindersportwagen mit einem klappbaren Gestell und einem Kindersitz bekannt, der mittels einer Verstelleinrichtung in der Höhe zwischen einer tiefen Kinderwagen-Position und einer hohen Tisch-Sitzposition verstellbar ist. Hierzu ist im Wagengestell eine senkrecht verlaufende Verstelleinrichtung vorgesehen, an der der Kindersitz befestigt ist. Diese Verstelleinrichtung besteht aus mindestens einer Linearführungseinrichtung, die zwischen dem Wagengestell und dem Kindersitz angeordnet ist. Sie kann aus einer Zahnstange bestehen und ein in die Zahnung der Zahnstange eingreifendes Rastorgan aufweisen, um eine Arretierung in einer definierten Höhenposition zu ermöglichen.

Aus der DE 20 2012 007 192 U1 ist ein modulares Nutzfahrzeug mit einem Ladebereich bekannt, der von einem zumindest ein Laufrad aufweisenden Fahrgestell getragen ist. Das Nutzfahrzeug kann als Kinderwagen genutzt werden oder mittels einer Deichsel an ein Zugfahrzeug angehängt werden. Ferner ist eine Handhabe vorgesehen, die derart in Wirkverbindung mit einem Stützrad steht, dass dieses durch Betätigen der Handhabe aus einer Rückzugsposition, in der es vom Boden abgehoben ist, in eine Stützposition auf den Boden bewegbar ist. In einer Ausführung ist in dem Ladebereich eine höhenverstellbare Sitzeinheit für ein Kind angeordnet. Durch Entfernen der Deichsel kann das Nutzfahrzeug in einen Kinderwagen umgewandelt werden bzw. in einen fahrbaren Rollstuhl, wobei die Position und der Schwerpunkt des Sitzeinsatzes durch die Höhenverstellung verlagerbar sind.

WO 2012/027795 A1 offenbart einen Kinderwagen mit einer Sicherung zur Verhinderung des versehentlichen Auslösens eines Klappmechanismus. Der Kinderwagen weist hierzu eine erste und eine zweite Auslöseeinrichtung auf. Die erste Auslöseeinrichtung kann ein Band aufweisen, dass unterhalb eines Sitzeinsatzes angeordnet und mit weiteren Komponenten der ersten Auslöseeinrichtung verbunden ist. Der Sitzeinsatz kann bei dem Kinderwagen nicht verlagert werden.

Die GB 2343623 A offenbart einen Hochstuhl, welcher in eine Schaukelposition problemlos überführbar ist, wenn das Kind in der Sitzeinheit angeordnet ist. Hierzu wird ein Hauptrahmen offenbart, an welchem ein verschwenkbarer Unterrahmen angeordnet ist. Das Sitzelement kann über Arretierungsmittel in Längsrichtung der Schenkel des Unterrahmens entsprechend höhenverstellt werden. Zwangsläufig ist es allerdings notwendig, die Sitzposition als Hochstuhl abzusichern, in dem ein Fixierungsmittel, beispielsweise eine Klammer, beide Rahmen fest aneinander verbindet.

US 5,829,826 A offenbart einen Kinderstuhl, der von einer Hochstuhlstellung in eine Kinderwagenstellung verbracht werden kann. Hierzu kann ein Sitzteil von einer oberen, hinteren Position in eine untere, vordere Position verbracht werden.

US 2007/0194614 A1 offenbart einen Hochstuhl für Kinder, wobei ein Sitzteil von einer oberen, hinteren Position in eine untere, vordere Position verbracht werden kann.

Es hat sich gezeigt, dass beim Transport von schweren Kindern in einem Kinderwagen mit einem gattungsgemäßen Wagengestell oder auch beim Transport schwerer Gegenstände in Puppenwagen, die schnell geschoben werden, es insbesondere bei Kurvenfahrten zu einem Kippen des Wagens kommen kann.

Der Erfindung liegt deshalb die Aufgabe zugrunde, auch bei einem gattungsgemäßen Wagengestell eine Schwerpunktverlagerung des Einsatzes mit dem darin befindlichen Kind oder der Puppe oder einem anderem Gegenstand zu ermöglichen, und zwar auf einfache Art und Weise, ohne die Struktur des Aufbaus des Wagengestells zu beeinträchtigen, um eine hohe Kippsicherheit zu erreichen.

Die Aufgabe löst die Erfindung durch Ausgestaltung des zusammenklappbaren Kinderwagen- oder Puppenwagengestells gemäß der im Anspruch 1 angegebenen Lehre, wonach im Wesentlichen parallel hierzu verlaufend an den Stützstreben und/oder an den Gestellholmen angebrachte Führungsschienen vorgesehen sind, auf denen Halter zur Fixierung des Sitz- oder Liegeeinsatzes höhenverschiebbar und mindestens in einer oberen und einer unteren Verschiebeposition arretierbar gleitend gelagert sind, wobei der Schwerpunkt des Einsatzes in der oberen Position gegenüber dem in der unteren Position vorverlagert ist.
Wenn die Stützstreben einteilig ausgebildet sind und beispielsweise aus einem rechteckförmigen oder ovalen Hohlprofil oder einem Vollprofil mit Führungslängsnuten bestehen, kann auf diesen ein Halter gleitend aufgebracht sein, an dem der Einsatz, z. B. ein Sitzeinsatz oder ein Liegeeinsatz für ein Kleinkind, obenseitig oder seitlich befestigbar ist. Der Halter ist mit Verriegelungselementen versehen, um diesen zumindest in der obersten und in der untersten Schiebeposition an der Stützstrebe fixieren zu können. Wenn eine Verstellung in mehreren Höhenpositionen gewünscht ist, können auch weitere Raststellungen vorgesehen sein. Es ist aber auch möglich, als Arretierungselement beispielsweise einen Exzenterfeststellhebel am Halter anzubringen, der durch Drehung gegen eine Stützfläche der Stützstrebe in einer gewünschten Höhenposition verdrehbar ist und durch weiteres Drehen durch die Exzenterausgestaltung eine Festklemmung bewirkt.
Wenn die Stützstreben jedoch geteilt sind, beispielsweise jeweils ein zusätzliches Gelenk in etwa in der Mitte vorgesehen ist oder andere Träger oder Halter vorgesehen sind, beispielsweise solche, wie sie eingangs beschrieben worden sind, ist eine unmittelbare Nutzung der Stützstrebe als Führungsschiene für die Halter nicht geeignet. Deshalb ist alternativ vorgesehen, dass eine solche Führungsschiene im Wesentlichen parallel verlaufend entweder oben- und untenseitig an der Stützstrebe mindestens einseitig schwenkbeweglich befestigt ist oder untenseitig an der Stützstrebe fest und obenseitig schwenkbeweglich an einem Gestellholm, und zwar unterhalb des Gelenkes der Stützstrebe befestigt ist. Die Halter sind auf diesen Führungsschienen aufgesetzt und werden in gleicher Weise nach oben und unten verschoben. Die Länge der Führungsschienen ist wählbar und kann die Gestellholme auch überstehen.

Damit ein Zusammenklappen des Gestells sichergestellt ist, muss dafür Sorge getragen werden, dass bei der Bewegungstransformation mit der Schwenkbewegung der Stützstreben in Richtung der Gestellholme die Führungsschiene diese Bewegung nicht behindert. Dies wird ausgeschlossen, wenn auch die obere Lagerung der Führungsschiene an der Stützstrebe abgestützt ist. Im Falle der schwenkbeweglichen Anlenkung an dem Gestellholm muss zusätzlich eine geringfügige Höhenverschiebung der Führungsschiene an dem Drehgelenk sichergestellt sein, damit ein Zusammenklappen der Gestellholme und der Stützstreben vorgenommen werden kann.

Vorteilhafte Weiterbildungen der Erfindung sind in den Unteransprüchen im Detail angegeben.

In einer Ausführungsform ist vorgesehen, dass an den schrägen Gestellholmen Schiebestangen angebracht sind, die auch die Rückenlehne eines Sitzeinsatzes überstehen, und dass an den Enden der Schiebestangen einzelne Schiebegriffe oder ein verbindender, in der Mitte faltbarer oder nicht faltbarer Schiebebügel angebracht sind oder ist. Solche Ausbildungen sind bekannt. Die Schiebestangen können dabei über feststellbare Gelenke nach vorne oder nach hinten verschwenkbar angebracht sein. Sie können aber auch starr mit dem Gestellholm verbunden sein.

Die Gestellholme selbst können durchgehende Gestellholme sein oder aber auch unterteilte Gestellholme, z. B. können sie auch oberhalb des Schwenkgelenkes für die Stützstreben unterteilt sein. Dies ist grundsätzlich aber auch für den unteren Bereich der Gestellholme möglich. Des Weiteren können die Schwenkgelenke zwischen Stützstrebe und Gestellholm unterschiedlich ausgebildet sein. Es können einfache Gelenke sein oder aber auch über Zahnkränze miteinander verzahnte Gelenke, die eine Bewegungstransformation von einem Teil auf den anderen bewirken.

Wenn das Gestell so aufgebaut ist, dass es auch nach dem Entfernen des Sitzeinsatzes ein seitliches Zusammenfahren der Gestellholme ermöglicht, müssen entweder einzelne Schiebegriffe oder ein faltbarer Schiebebügel vorgesehen sein. Dasselbe trifft auch für ein eventuelles Brückenglied zu, das im unteren Bereich der Gestellholme angebracht oder auch dazwischen liegend vorgesehen sein kann. In allen Fällen wird im aufgestellten Zustand des Gestells sichergestellt, dass der Einsatz, nämlich beispielsweise ein Sitzeinsatz, der aus Sitzfläche, Rückenlehne und ggf. Fußstützteil besteht, in der Höhe verschoben werden kann. Wenn der Kinderwagen sehr schnell geschoben wird und der Schwerpunkt durch die Verstellung nach unten verlagert ist, und zwar in Richtung der hinteren Räder, so ist ersichtlich, dass auch bei schnellen Kurvenbewegungen der Kinderwagen nicht kippen kann. Diese Verstellmöglichkeit ist insbesondere dann von Vorteil, wenn das Wagengestell durch Anbringung einer vorderseitigen starren Deichsel z. B. zum Fahrradanhänger wird. Die Funktion der Vorderräder kann dabei unberücksichtigt bleiben.

Da die Gestellholme auch gebogen ausgeführt sein können, also ein ovales Gebilde vorgesehen sein kann oder das Gebilde aber auch geradlinig sein kann und in Längsrichtung eine Bogen- oder Wellenform aufweisen kann, ist in jedem Fall dafür Sorge zu tragen, dass die Gestellholme in einem solchen Abstand zueinander angeordnet sind, dass der Einsatz sowohl in die obere als auch in die untere Position ungehindert verfahrbar ist.

Die Erfindung wird nachfolgend anhand des in der Zeichnung dargestellten Ausführungsbeispiels ergänzend erläutert.

In der Zeichnung zeigen:
- FIG 1: in einer isometrischen Darstellung ein Kinderwagengestell mit einem Sitzeinsatz in höchster Position und
- FIG 2: das in FIG 1 dargestellte Kinderwagengestell mit einem Sitzeinsatz in der niedrigsten Position.

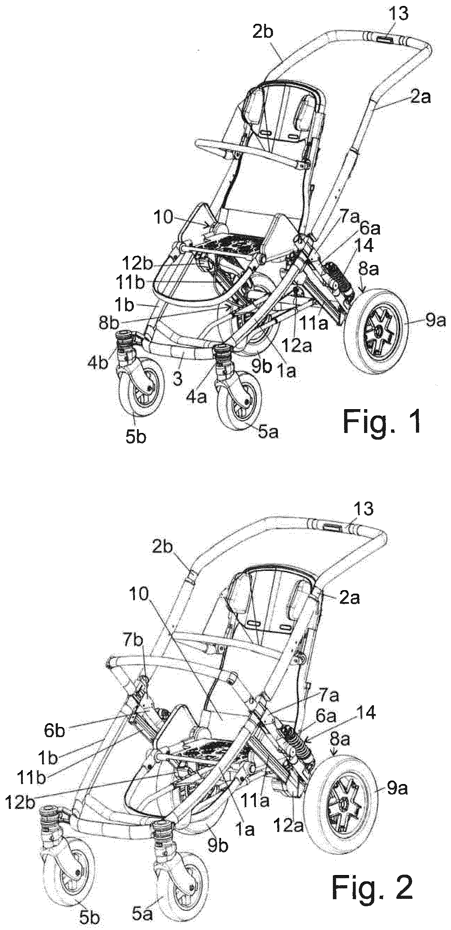

Das in den FIG 1 und 2 dargestellte Kinderwagengestell besteht im Wesentlichen aus den Gestellholmen 1a, 1b, die von vorne unten schräg aufsteigend nach hinten verlaufend im aufgestellten Zustand des Kinderwagengestells angeordnet sind. In Verlängerung zu den Gestellholmen 1a und 1b, die durchgehend ausgeführt oder durch ein Gelenk geteilt sein können, sind Schiebestangen 2a, 2b vorgesehen, die herausziehbar in den oberen Abschnitten der Gestellholme 1a, 1b gelagert sind. Die beiden Schiebestangen 2a, 2b sind über einen Schiebebügel 13 miteinander verbunden. Die unteren Enden der Gestellholme 1a, 1b sind über ein Brückenteil 3 miteinander verbunden und weisen ferner Vorderradanordnungen 4a, 4b auf, die aus senkrechten Lagern bestehen, in denen je ein Lagerzapfen mit je einer gabelförmigen Aufnahme verschwenkbar gelagert ist, in denen die Vorderräder 5a und 5b gelagert sind. An den Gestellholmen 1a und 1b sind Schwenklager 7a und 7b befestigt. An diesen Schwenklagern 7a, 7b sind nach vorne in Richtung der Gestellholme 1a, 1b verschwenkbare Stützstreben 6a und 6b befestigt. Die Stützstreben 6a, 6b sind längsgeteilt und weisen jeweils ein in etwa in der Mitte eingebrachtes Gelenk auf und eine das Gelenk überbrückende Dämpfungsfeder 14. Diese überbrückenden Dämpfungsfedern 14, die an den Schenkeln der Stützstreben 6a, 6b befestigt sind, bewirken eine Dämpfung der Stoßbelastung bei Befahren eines Bodens mit Kopfsteinen oder einer anderen rauen Oberfläche. Die unteren Enden der oberen Schenkel der Stützstreben 6a, 6b sind über ein Brückenteil miteinander verbunden. Die unteren Schenkel weisen Lagerungen 8a, 8b für die Hinterräder 9a und 9b auf.

Erfindungswesentlich ist die Anbringung von Führungsschienen 11a, 11b, die untenseitig an den Stützstreben 6a, 6b jeweils befestigt und obenseitig schwenkbeweglich und nach oben verschiebbar an einem Gestellholm derart befestigt sind, dass beim Vorschwenken der Stützstreben 6a, 6b in Richtung der unteren Abschnitte der Gestellholme 1a, 1b die Führungsschienen 11a, 11b ebenfalls nach vorne verschenkt werden können, was zum Zusammenklappen des Wagengestells erforderlich ist. Obenseitig kann die Führungsschiene auch an der jeweiligen Stützstrebe 6a, 6b befestigt sein. Auf den Führungsschienen 11a, 11b sind Halter 12a und 12b längsverschieblich angeordnet. Diese sind mit Arretierungsmitteln versehen, die mit den Führungsschienen 11a und 11b zusammenwirken, beispielsweise kann dies ein über eine Taste betätigbarer Rastbolzen sein, der in ein Loch in der Führungsschiene unter Federwirkung einrastet und durch Betätigen eines Bedienknopfes wieder ausrastet. Solche Löcher sind sowohl obenseitig als auch untenseitig an den Führungsschienen 11a und 11b zur Verlagerung und Fixierung der Halter 12a und 12b vorgesehen.

An den Haltern 12a und 12b ist ein Sitzeinsatz 10 befestigt, der in die in FIG 1 dargestellte obere Position verbringbar ist und gemäß FIG 2 auch in die untere Position abgesenkt werden kann, wodurch sich der Schwerpunkt des Sitzeinsatzes 10 mit dem darin sitzenden Kind von oben vorne nach hinten unten verschiebt, wobei der Schwerpunkt stets zwischen den beiden Vorderrädern 5a und 5b sowie den Hinterrädern 9a und 9b verbleibt, wodurch eine erhöhte Kippsicherheit des Fahrgestells gegeben ist, auch dann, wenn damit eine Kurve schnell befahren wird. Die übrigen Bauteile des Fahrgestells sind nicht näher beschrieben, da sie für die Erfindung keine Relevanz besitzen.

### Bezugszeichenliste

- 1a: Gestellholm
- 1b: Gestellholm
- 2a: Schiebestange
- 2b: Schiebestange
- 3: Brückenteil
- 4a: Vorderradanordnung
- 4b: Vorderradanordnung
- 5a: Vorderrad
- 5b: Vorderrad
- 6a: Stützstrebe
- 6b: Stützstrebe
- 7a: Gelenk
- 7b: Gelenk
- 8a: Lagerung
- 8b: Lagerung
- 9a: Hinterrad
- 9b: Hinterrad
- 10: Sitzeinsatz
- 11a: Führungsschiene
- 11b: Führungsschiene
- 12a: Halter
- 12b: Halter
- 13: Schiebebügel
- 14: Dämpfungsfeder

## Patentansprüche

1. Zusammenklappbares Kinderwagen- oder Puppenwagengestell, aufweisend mindestens zwei seitliche, im aufgestellten Zustand schräg von unten vorne nach hinten oben verlaufende Gestellholme (1a, 1b) mit daran obenseitig in Verlängerung vorgesehenen Schiebestangen (2a, 2b) und an den unteren Enden oder an einem diese verbindenden Brückenteil (3) vorgesehenen Vorderradanordnung (4a, 4b) mit Vorderrädern (5a, 5b), zwei seitliche Stützstreben (6a, 6b), die mit den Gestellholmen (1a, 1b) beabstandet zu deren unteren Enden schwenkbeweglich über je ein Gelenk (7a, 7b) befestigt sind und an ihren gegenüber den Anlenkungspunkten nach hinten versetzten unteren Enden Lagerungen (8a, 8b) für Hinterräder (9a, 9b) aufweisen, und einen Sitz- (10) oder Liegeeinsatz, der in der Höhe im Gestell versetzbar angeordnet ist, **dadurch gekennzeichnet, dass** im Wesentlichen parallel hierzu verlaufend an den Stützstreben (6a, 6b) und/oder an den Gestellholmen (1a, 1b) angebrachte Führungsschienen (11a, 11b) vorgesehen sind, auf denen Halter (12a, 12b) zur Fixierung des Sitz- (10) oder Liegeeinsatzes höhenverschiebbar und mindestens in einer oberen und einer unteren Verschiebeposition arretierbar gleitend gelagert sind, wobei der Schwerpunkt des Einsatzes (10) in der oberen Position gegenüber dem in der unteren Position vorverlagert ist.

2. Zusammenklappbares Kinderwagen- oder Puppenwagengestell nach Anspruch 1, **dadurch gekennzeichnet, dass** an den schrägen Gestellholmen (1a, 1b) Schiebestangen (2a, 2b) angebracht sind, die den Einsatz (10) überstehen, und dass an den Enden der Schiebestangen (2a, 2b) einzelne Schiebegriffe oder ein verbindender, in der Mitte faltbarer oder nicht faltbarer Schiebebügel (13) angebracht ist.

3. Zusammenklappbares Kinderwagen- oder Puppenwagengestell nach Anspruch 1, **dadurch gekennzeichnet, dass** die Halter (12a, 12b) Arretierungsbolzen aufweisen, die über einen Druckknopf oder einen Schwenkhebel betätigbar sind und in Rastausnehmungen an den Führungsschienen (11a, 11b) mindestens in der oberen und unteren Verschiebeposition des Einsatzes einrastbar sind.

4. Zusammenklappbares Kinderwagen- oder Puppenwagengestell nach Anspruch 1, **dadurch gekennzeichnet, dass** die zusätzliche Führungsschiene (11a, 11b) über Abstandshalter mindestens untenseitig an der Stützstrebe (6a, 6b) befestigt ist und obenseitig wahlweise an der Stützstrebe (6a, 6b) oder unterhalb des Gelenkes der Stützstrebe (6a, 6b) an dem jeweiligen Gestellholm (1a, 1b) schwenkbar befestigt ist.

5. Zusammenklappbares Kinderwagen- oder Puppenwagengestell nach Anspruch 1, **dadurch gekennzeichnet, dass** die Gestellholme (1a, 1b) in einem solchen Abstand zueinander angeordnet sind, dass der Einsatz (10) sowohl in die obere als auch untere Position ungehindert verfahrbar ist.

6. Zusammenklappbares Kinderwagen- oder Puppenwagengestell nach Anspruch 1 oder 4, **dadurch gekennzeichnet, dass** die an dem Gestellholm angelenkte Führungsschiene (11a, 11b) gegenüber dem Anlenkungspunkt auch in der Höhe verschiebbar am Gelenk gelagert ist.

## Claims

1. Collapsible baby carriage or doll's pram chassis, comprising at least two lateral chassis posts (1a, 1b), which in the erected state extend at an inclination from the bottom at the front rearwardly in upward direction, with push bars (2a, 2b) provided thereat at the upper side in prolongation and a front wheel arrangement (4a, 4b), which is provided at the lower ends or at a bridge part (3) connecting these, with front wheels (5a, 5b), two lateral support struts (6a, 6b), which are pivotably attached to the chassis posts (1a, 1b) at a spacing from the lower ends thereof each by way of a respective joint (7a, 7b) and which have bearings (8a, 8b) for rear wheels (9a, 9b) at their lower ends, these ends being offset rearwardly relative to the pivot points, and a seat insert (10) or lying-down insert arranged in the chassis to be displaceable in height, **characterised in that** guide rails (11a, 11b) mounted to extend substantially parallel thereto at the support struts (6a, 6b) and/or at the chassis posts (1a, 1b) are provided, holders (12a, 12b) for fixing the seat insert (10) or lying-down insert being slidably mounted on the rails to be displaceable in height and lockable at least in an upper displacement position and a lower displacement position, wherein the centre of gravity of the insert (10) in the upper position is displaced forwardly with respect to that in the lower position.

2. Collapsible baby carriage or doll's pram chassis according to claim 1, **characterised in that** push bars (2a, 2b) projecting beyond the insert (10) are mounted on the inclined chassis posts (1a, 1b) and that individual push grips or a connecting push yoke (13) foldable in the centre or non-foldable is or are mounted at the ends of the push bars (2a, 2b).

3. Collapsible baby carriage or doll's pram chassis according to claim 1, **characterised in that** the holders (12a, 12b) comprise locking pins which are actuable by way of a pushbutton or a pivot lever and are detentable in detent recesses at the guide rails (11a, 11b) at least in the upper and lower displacement positions of the insert.

4. Collapsible baby carriage or doll's pram chassis according to claim 1, **characterised in that** the guide rail (11a, 11b), when additional, is attached at least at the lower end to the support strut (6a, 6b) by way of spacers and at the upper end is pivotably attached selectably to the support strut (6a, 6b) or below the joint of the support strut (6a, 6b) to the respective chassis post (1a, 1b).

5. Collapsible baby carriage or doll's pram chassis according to claim 1, **characterised in that** the chassis posts (1a, 1b) are arranged at such a spacing relative to one another that the insert (10) is movable without hindrance not only into the upper position, but also into the lower position.

6. Collapsible baby carriage or doll's pram chassis according to claim 1 or 4, **characterised in that** the guide rail (11a, 11b) pivoted to the chassis post is mounted at the joint to also be displaceable in height relative to the pivot point.

## Revendications

1. Armature pliable pour poussette d'enfant ou de poupée, comprenant au moins deux barres d'armature latérales (1a, 1b) s'étendant obliquement du bas vers le haut et d'avant en arrière en état déplié, avec des tiges de poussée (2a, 2b) prévues sur elles et dans leur prolongement, et un dispositif de roue avant (4a, 4b) avec des roues avant (5a, 5b) prévu aux extrémités inférieures ou sur une pièce de raccordement (3) reliant celles-ci, deux branches d'appui latérales (6a, 6b) fixées de manière pivotante aux barres d'armature (1a, 1b) à distance de leurs extrémités inférieures, au moyen d'une articulation (7a, 7b) chacune, et présentant des paliers (8a, 8b) pour des roues arrière (9a, 9b) à leurs extrémités inférieures décalées vers l'arrière par rapport aux points d'articulation, et un élément (10) pour siège ou berceau monté sur l'armature de manière réglable en hauteur, **caractérisée en ce que** des rails de guidage (11a, 11b) sont prévus, montés sur les branches d'appui (6a, 6b) et/ou sur les barres d'armature (1a, 1b) en s'étendant sensiblement parallèlement à celles-ci, sur lesquels sont montés des supports (12a, 12b) pour la fixation de l'élément (10) pour siège ou berceau, de manière réglable en hauteur et coulissante avec possibilité de blocage dans au moins une position de réglage supérieure et une position de réglage inférieure, dans lequel le centre de gravité de l'élément (10) est plus avancé en position supérieure qu'en position inférieure.

2. Armature pliable pour poussette d'enfant ou de poupée selon la revendication 1, **caractérisée en ce que** des tiges de poussée (2a, 2b) sont montées sur les barres d'armature obliques (1a, 1b) et dépassent de l'élément (10), et **en ce que** des poignées de poussée individuelles ou un arceau de poussée (13) de liaison, pliable en son milieu ou non pliable, est monté aux extrémités des tiges de poussée (2a, 2b).

3. Armature pliable pour poussette d'enfant ou de poupée selon la revendication 1, **caractérisée en ce que** les supports (12a, 12b) sont pourvus d'axes de blocage actionnables par un bouton-poussoir ou un levier pivotant et sont enclenchables dans des évidements d'enclenchement sur les rails de guidage (11a, 11b) au moins en position de réglage supérieure et en position de réglage inférieure de l'élément.

4. Armature pliable pour poussette d'enfant ou de poupée selon la revendication 1, **caractérisée en ce que** le rail de guidage complémentaire (11a, 11b) est fixé de manière pivotante au moins sur le bas de la branche d'appui (6a, 6b) au moyen d'espaceurs, et en haut sélectivement sur la branche d'appui (6a, 6b) ou en dessous de l'articulation de la branche d'appui (6a, 6b) sur la barre d'armature (1a, 1b) correspondante.

5. Armature pliable pour poussette d'enfant ou de poupée selon la revendication 1, **caractérisée en ce que** les barres d'armature (1a, 1b) sont disposées à espacement l'une de l'autre tel que l'élément (10) est librement déplaçable tant vers la position supérieure que vers la position inférieure.

6. Armature pliable pour poussette d'enfant ou de poupée selon la revendication 1 ou 4, **caractérisée en ce que** le rail de guidage (11a, 11b) articulé sur la barre d'armature est monté de manière également réglable en hauteur sur l'articulation par rapport au point d'articulation.
